(19) Europäisches Patentamt
European Patent Office
Office européen des brevets

(11) **EP 4 006 571 A1**

(12) **DEMANDE DE BREVET EUROPEEN**

(43) Date de publication:
**01.06.2022 Bulletin 2022/22**

(21) Numéro de dépôt: **21210043.2**

(22) Date de dépôt: **23.11.2021**

(51) Classification Internationale des Brevets (IPC):
*G01S 7/03* ^(2006.01)   *G01S 7/285* ^(2006.01)
*G01S 7/35* ^(2006.01)   *G01S 13/26* ^(2006.01)
*G01S 13/34* ^(2006.01)

(52) Classification Coopérative des Brevets (CPC):
**G01S 7/032; G01S 7/285; G01S 7/2883;
G01S 7/352; G01S 13/24; G01S 13/26;
G01S 13/30; G01S 13/343; G01S 13/931**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **26.11.2020 FR 2012198**

(71) Demandeur: **Commissariat à l'énergie atomique
et aux énergies alternatives
75015 Paris (FR)**

(72) Inventeurs:
- **ZARUDNIEV, Mykhailo
38054 GRENOBLE CEDEX 09 (FR)**
- **DEHOS, Cédric
38054 GRENOBLE CEDEX 09 (FR)**
- **SILIGARIS, Alexandre
38054 GRENOBLE CEDEX 09 (FR)**

(74) Mandataire: **Brevalex
95, rue d'Amsterdam
75378 Paris Cedex 8 (FR)**

(54) **DISPOSITIF DE DETECTION RADAR**

(57)    Dispositif de mesure radar (100) comportant au moins :
- un circuit de génération d'un signal radar $RF_{IN}(t)$ (102) ;
- une antenne d'émission (108) ;
- un oscillateur verrouillé par injection (110) ;
- un premier diviseur de puissance (104) comprenant une entrée couplée à une sortie du circuit de génération du signal radar $RF_{IN}(t)$, une première sortie couplée à l'antenne d'émission, et une deuxième sortie couplée à une entrée de l'oscillateur verrouillé par injection qui est configuré pour se verrouiller sur une partie d'une bande effective B du signal radar $RF_{IN}(t)$ ;

- une antenne de réception (112) destinée à recevoir un signal radar réfléchi $RF_{IN\_REFL}(t)$ ;
- un mélangeur (118) comprenant une première entrée couplée à l'antenne de réception, une deuxième entrée couplée à une sortie de l'oscillateur verrouillé par injection ;
- un circuit de traitement de signal (120) dont une entrée est couplée à une sortie du mélangeur (118, 118.1 - 118.m), et configuré pour fournir un signal représentatif d'une distance entre l'antenne de réception (112) et au moins un réflecteur (114.1, 114.2) sur lequel le signal radar $RF_{IN}(t)$ s'est réfléchi.

FIG.1

**Description**

**DOMAINE TECHNIQUE**

L'invention concerne le domaine des dispositifs de mesure radar dits « large bande », c'est-à-dire utilisant des signaux radar ayant des bandes de fréquences effectives de largeur supérieure ou égale à 1 GHz, permettant de mesurer une ou des distances entre le dispositif de mesure radar et un ou plusieurs réflecteurs.

L'invention s'applique notamment au domaine de la mesure radar courte portée (« Short Range Radar» en anglais), et qui correspond à des mesures réalisées pour des distances par exemple inférieures à quelques kilomètres, voire inférieures à 100 m ou 10 m, utilisées notamment dans le domaine automobile (par exemple pour les radars de régulation de distance, également appelés radars ACC pour « Adaptive Cruise Control » en anglais), dans celui de la surveillance et de la défense, dans l'aéronautique, pour la reconnaissance de geste via des mesures de distance et la reconstruction des mouvements détectés à partir des distances mesurées, ou la réalisation d'interface homme-machine, ou encore le domaine de la mesure et de la surveillance de signes vitaux (rythme cardiaque et respiration), etc.

**ÉTAT DE LA TECHNIQUE ANTÉRIEURE**

Les dispositifs de mesure radar dit cohérents, c'est-à-dire qui mesurent les informations contenues dans un signal radar reçu en se basant sur des déphasages (fréquentiels et/ou temporels) vis-à-vis du signal radar émis, nécessitent de connaître et maîtriser les paramètres du signal radar émis. Le paramètre le plus important à connaître est l'instant de démarrage du signal en émission, sans lequel il est très difficile d'acquérir le signal en réception et retrouver l'information spatiale de mesure suite à cette acquisition.

Deux groupes d'architectures de tels dispositifs de mesure radar permettent d'émettre et recevoir les deux principaux types de modulation d'un signal radar: FMCW (« Frequency Modulated Continuous Wave » en anglais, ou à ondes entretenues modulées en fréquence) et IR-UWB (« Ultra Wide Band Impulse Radio » en anglais, ou à impulsions radio ultra large bande).

Un avantage des dispositifs de type FMCW par rapport à ceux de type IR-UWB est que la fréquence d'échantillonnage utilisée lors de la conversion analogique - numérique du signal radar reçu et nécessaire pour respecter le théorème de Nyquist-Shannon est bien inférieure à celle nécessaire dans les dispositifs de type IR-UWB. Une faible fréquence d'échantillonnage permet de limiter le coût et la consommation des convertisseurs analogique - numérique et du ou des circuits de traitement numérique du signal utilisés dans le dispositif radar. Par ailleurs, cette faible fréquence d'échantillonnage permet de réduire la bande d'acquisition du dispositif, ce qui permet de réduire le bruit sur la tension de sortie radar et joue en faveur du rapport signal-à-bruit (SNR) obtenu.

Par contre, un dispositif de type FMCW est fortement contraint par les durées d'émission et de réception des signaux radar qui lui sont imposées en raison des caractéristiques des signaux radar utilisés. Un dispositif de type IR-UWB n'a pas cette contrainte puisque la bande effective du signal radar est inversement proportionnelle à cette durée d'émission ou de réception. Un avantage procuré par une faible durée d'émission et de réception de signaux radar est que tout ou partie de l'électronique du dispositif radar peut être éteinte ou fonctionner en mode dégradé entre l'émission ou la réception de deux signaux radar (mode de fonctionnement couramment nommé « duty cycling » en anglais), ce qui permet de réduire la consommation énergétique globale du dispositif radar.

La bande effective B d'un signal radar est définie par l'IEEE dans le document « IEEE Standard for Radar Definitions », IEEE Std 686-2017, 2017, pp 1-54 et correspond au rapport entre la variance de l'énergie du signal radar et l'énergie de ce signal tel que :

$$B = \frac{\int_{-\infty}^{+\infty} \left(2\pi(f - f_0)\right)^2 |\mathcal{F}[s](f)|^2 df}{\int_{-\infty}^{+\infty} |\mathcal{F}[s](f)|^2 df}$$

où s(t) correspond au signal radar reçu, $\mathcal{F}$[s] correspond à la transformée de Fourier du signal radar reçu, et $f_0$ correspond à la fréquence centrale du spectre du signal radar.

La bande effective B du signal radar utilisé détermine en grande partie la capacité du dispositif radar à pouvoir séparer et distinguer deux réflecteurs proches, et représente donc la résolution pouvant être atteinte par le dispositif radar. Avoir une bande effective B la plus grande possible est donc également un objectif généralement recherché.

**EXPOSÉ DE L'INVENTION**

Un but de la présente invention est de proposer une nouvelle architecture de dispositif de mesure radar permettant de mesurer une ou des distances entre le dispositif de mesure radar et un ou plusieurs réflecteurs, tout en obtenant un bon compromis entre les différents paramètres exposés ci-dessus, à savoir la possibilité d'avoir une faible fréquence d'échantillonnage pour la conversion analogique - numérique des signaux radar reçus, une faible durée d'émission et de réception de signaux radar et une bande effective des signaux radar qui soit importante.

Pour cela, la présente invention propose un dispositif de mesure radar comportant au moins :

- un circuit de génération d'un signal radar $RF_{IN}(t)$ ;
- une antenne d'émission ;
- un oscillateur verrouillé par injection, ou ILO (« Injection Locked Oscillator» en anglais) ;
- un premier diviseur de puissance comprenant une entrée couplée à une sortie du circuit de génération du signal radar $RF_{IN}(t)$, une première sortie couplée à l'antenne d'émission, et une deuxième sortie couplée à une entrée de l'oscillateur verrouillé par injection qui est configuré pour se verrouiller sur une partie d'une bande effective B du signal radar $RF_{IN}(t)$ ;
- une antenne de réception destinée à recevoir un signal radar réfléchi $RF_{IN\_REFL}(t)$;
- un mélangeur comprenant une première entrée couplée à l'antenne de réception, une deuxième entrée couplée à une sortie de l'oscillateur verrouillé par injection, et une sortie couplée à une entrée d'un circuit de traitement de signal.

En outre, le circuit de traitement de signal est configuré pour fournir un signal représentatif d'une distance entre l'antenne de réception et au moins un réflecteur sur lequel le signal radar $RF_{IN}(t)$ s'est réfléchi.

Dans ce dispositif de mesure radar, le signal radar $RF_{IN}(t)$ est divisé avant son émission via le premier diviseur de puissance et une partie de la puissance de ce signal est utilisée pour alimenter et verrouiller un ILO. L'ILO ayant une fréquence d'oscillation propre qui est paramétrable, ou reconfigurable, par exemple via l'ajustement d'une tension de contrôle appliquée en entrée de celui-ci et/ou une modification de la valeur d'une banque des capacités commutables d'un résonateur LC de l'ILO, celui-ci est piloté pour qu'il se verrouille sur une partie de la bande effective B du signal radar $RF_{IN}(t)$. L'ILO recopie le signal radar $RF_{IN}(t)$ seulement dans sa bande de verrouillage propre qui est définie par les propriétés de son résonateur et/ou la tension de contrôle appliquée sur son entrée, et qui correspond à une partie de la bande effective B du signal radar $RF_{IN}(t)$. L'ILO assure une fonction analogue à celle d'un filtre RF paramétrable permettant de sélectionner une bande de mesure. Le signal délivré en sortie de l'ILO est ensuite envoyé en entrée du mélangeur afin d'assurer une transposition en fréquence du signal radar réfléchi $RF_{IN\_REFL}(t)$.

La durée totale mise par le signal émis pour atteindre un réflecteur (« scatterer» en anglais), se réfléchir sur celui-ci et atteindre l'antenne de réception du dispositif radar se traduit par une translation temporelle proportionnelle à la somme des distances que ce signal a parcouru, et devient le signal reçu. Autrement dit, cette durée se traduit par un retard sur la rampe de fréquences formée par le spectre du signal reçu, et ce décalage entre la rampe de fréquences formée par le spectre du signal émis et celle formée par le spectre du signal reçu se traduit par une différence de fréquence. Après avoir été mélangé avec le signal de sortie de l'ILO, ce signal reçu devient un signal basse fréquence à partir duquel les informations de distance et de vitesse relative du réflecteur vis-à-vis dispositif de mesure radar sont retrouvées après le traitement appliqué par le circuit de traitement de signal.

Grâce à l'utilisation de l'ILO pour réaliser le lien entre la partie émission et la partie réception du dispositif de mesure radar, la cohérence entre les signaux radar émis et reçus est conservée dans la bande de mesure. Le temps de verrouillage de l'ILO sur le signal radar $RF_{IN}(t)$ étant quasi-instantané (de l'ordre de quelques nanosecondes), les variations de fréquence du signal $RF_{IN}(t)$ peuvent être très rapides et le signal radar $RF_N(t)$ peut avoir un faible rapport cyclique, c'est-à-dire peut avoir une valeur nulle sur une grande partie de chaque période du signal. Grâce à la faible durée d'émission et de réception nécessaire à ce dispositif radar, il est donc possible de réaliser des économies d'énergie en faisant fonctionner les parties émission et réception du dispositif de mesure radar tel qu'elles soient éteintes ou qu'elles fonctionnent en mode dégradé entre deux émissions / réceptions de signaux radar.

En outre, avec ce dispositif de mesure radar, la fréquence d'échantillonnage utilisée lors d'une conversion analogique - numérique du signal radar réfléchi peut être plus faible qu'avec les dispositifs de mesure de l'art antérieur, et par exemple comprise entre 100 MHz et 300 MHz.

Enfin, la présence de l'ILO dans le dispositif de mesure radar permet de garantir à tout moment la réception du signal radar périodique avec une amplitude non-nulle et de type «duty cycle», du côté récepteur du dispositif de mesure radar.

Le circuit de génération du signal radar $RF_{IN}(t)$ peut être configuré pour générer le signal radar $RF_{IN}(t)$ correspondant à :

- un signal périodique modulé en fréquence sur au moins une partie $T_{rampe}$ d'une période T dudit signal, correspondant, sur ladite au moins une partie $T_{rampe}$ de la période T, à un signal sinusoïdal dont la fréquence varie linéairement dans la bande effective B et dont l'amplitude alterne entre une première valeur et une deuxième valeur différente de la première valeur, ou

- un train d'impulsions dont la modulation fréquentielle est définie par la position temporelle du début de chaque impulsion, par le déphasage relatif du signal au début de chaque impulsion et par la largeur de chaque impulsion.

Lorsque le signal radar $RF_{IN}(t)$ correspond à un train d'impulsions tel que décrit ci-dessus, le dispositif de mesure radar a alors pour avantage que, par rapport aux signaux radar classiques de type FMCW ou IR-UWB, la bande effective B pouvant être balayée par le signal radar $RF_{IN}(t)$ est plus large et/ou, pour une bande effective B donnée, la durée nécessaire pour balayer cette bande est plus courte.

Le signal radar $RF_{IN}(t)$ correspondant à un train d'impulsions peut être tel que :

$$RF_{IN(t)} = \sum_{n=1}^{n_{max}} \prod \left( \frac{t - t_{start}(n) - \frac{T(n)}{4}}{\frac{T(n)}{2}} \right) \cdot e^{j2\pi f_a(t - t_{start}(n))}$$

avec :

$f_a$ correspondant à la fréquence de la porteuse du signal $RF_{IN}(t)$ ;

$T(n) = t_{start}(n+1) - t_{start}(n)$, et qui correspond à la durée d'une $n^{ième}$ impulsion du signal radar $RF_{IN}(t)$ ;

$$t_{start}(n) = \frac{f_{in}' T_{rampe}}{B_{in}} \left( -1 + \sqrt{1 + \frac{2 B_{in}}{f_{in}'^2 T_{ramp}} (n-1)} \right), n \in$$

$\{1, ..., n_{max}\}$ et qui correspondent aux moments du démarrage de chaque $n^{ième}$ impulsion du signal radar $RF_{IN}(t)$ ;

$f_{in}'$ correspondant à la fréquence fondamentale du signal modulant lorsque n = 1 ;

$n_{max}$ correspondant au nombre d'impulsions dans le signal radar $RF_{IN}(t)$ sur la bande effective B.

Le signal impulsionnel décrit ci-dessus peut comporter ou non un recouvrement spectral sur la durée $T_{rampe}$.

Selon un premier mode de réalisation, le dispositif peut comporter en outre un circuit de commande de l'oscillateur verrouillé par injection configuré pour modifier, à chaque période du signal radar $RF_{IN}(t)$, la bande de fréquences de verrouillage de l'oscillateur verrouillé par injection tel que, sur plusieurs périodes successives du signal radar $RF_{IN}(t)$, les bandes de fréquences de verrouillage de l'oscillateur verrouillé par injection couvrent, ensemble, la bande effective B. Ce premier mode de réalisation a pour avantage de ne faire appel qu'à un seul ILO, un seul diviseur de puissance et un seul mélangeur, ce qui minimise la consommation électrique du dispositif de mesure radar.

Le circuit de traitement de signal peut être configuré pour mettre en œuvre:

- un filtrage passe-bande du signal délivré en sortie du mélangeur, puis
- une conversion analogique - numérique du signal obtenu après la mise en œuvre du filtrage passe-bande, puis
- un traitement du signal obtenu après la mise en œuvre de la conversion analogique - numérique, ne conservant que des parties de ce signal pendant lesquelles l'oscillateur verrouillé par injection est verrouillé sur une partie de la bande effective B, puis
- une transformée de Fourier discrète du signal obtenu après la mise en œuvre du traitement ne conservant que des parties du signal pendant lesquelles l'oscillateur verrouillé par injection est verrouillé sur une partie de la bande effective B.

Le signal obtenu après avoir mis en œuvre la transformée de Fourier discrète est représentatif de la distance entre l'antenne de réception et le ou les réflecteurs sur lesquelles le signal radar $RF_{IN}(t)$ s'est réfléchi, et peut comporter notamment un ou des pics d'amplitude représentatifs de ce ou ces réflecteurs.

Selon un autre mode de réalisation, le dispositif de mesure radar peut comporter :

- plusieurs oscillateurs verrouillés par injection ;
- plusieurs premiers diviseurs de puissance configurés pour appliquer le signal radar $RF_{IN}(t)$ sur l'antenne d'émission et sur une entrée de chacun des oscillateurs verrouillés par injection ;
- plusieurs mélangeurs comprenant chacun une deuxième entrée couplée à une sortie d'un des oscillateurs verrouillés par injection et une sortie couplée à une entrée du circuit de traitement de signal ;
- un ou plusieurs deuxièmes diviseurs de puissance configurés pour appliquer le signal radar réfléchi $RF_{IN\_REFL}(t)$ sur une première entrée de chacun des mélangeurs.

Dans cet autre mode de réalisation, le signal radar $RF_{IN}(t)$ est appliqué en entrée de chaque ILO de manière indépendante. Les sorties de chaque ILO recopient le signal radar $RF_N(t)$ émis seulement dans la bande de fréquences de verrouillage propre à chaque ILO (et définie par les propriétés du résonateur de l'ILO et de la valeur de la tension de commande appliquée sur celui-ci). Chaque ILO filtre donc le signal radar $RF_{IN}(t)$ dans sa bande de fréquences de verrouillage. Ensuite, après avoir mélangé le signal de sortie de chaque ILO avec le signal radar réfléchi $RF_{IN\_REFL}(t)$ et ainsi transposé en fréquence le signal radar réfléchi $RF_{IN\_REFL}(t)$ dans la bande de fréquences de verrouillage de chaque ILO, des signaux basse fréquence sont obtenus à partir desquels des informations de distance et de vitesse relative du ou des réflecteurs vis-à-vis dispositif de mesure radar sont obtenues. Ainsi, le fait de considérer la réception de plusieurs bandes de fréquence par différents ILO permet d'utiliser un signal radar $RF_{IN}(t)$ dont la bande effective B est plus importante tout en conservant une faible durée de réception.

Dans cet autre mode de réalisation, lorsque le signal radar $RF_{IN}(t)$ correspond au signal impulsionnel précédemment décrit ci-dessus et comporte un recouvrement spectral sur la durée $T_{rampe}$, il est possible d'utiliser chaque ILO de manière à maximiser son temps de verrouillage sur une durée de rampe $T_{rampe}$.

Dans cet autre mode de réalisation, le circuit de traitement de signal peut être configuré pour mettre en œuvre:

- un filtrage passe-bande de chacun des signaux délivrés en sortie des mélangeurs, puis
- une conversion analogique - numérique de chacun des signaux obtenus après la mise en œuvre du filtrage, puis
- un traitement des signaux obtenus après la mise en œuvre de la conversion analogique - numérique, ne conservant que des parties de chacun de ces signaux pendant lesquelles chacun des oscillateurs verrouillés par injection est verrouillé sur une partie de la bande effective B, puis
- une transformée de Fourrier discrète d'un signal obtenu après la mise en œuvre du traitement ne conservant que des parties de chacun des signaux pendant lesquelles chacun des oscillateurs verrouillés par injection est verrouillé sur une partie de la bande effective B.

Le signal obtenu en sortie de la transformée de Fourrier discrète est représentatif de la distance entre l'antenne de réception et le ou les réflecteurs sur lesquels le signal radar $RF_N(t)$ s'est réfléchi, et peut comporter notamment un ou des pics d'amplitude représentatifs de ce ou ces réflecteurs.

Dans une première configuration de cet autre mode de réalisation, chacun des oscillateurs verrouillés par injection peut être configuré tel que sa bande de fréquences de verrouillage soit différente de celles des autres oscillateurs verrouillés par injection et que les bandes de fréquences de verrouillage des oscillateurs verrouillés par injection couvrent, ensemble, la bande effective B. Dans cette première configuration, les ILOs sont configurés pour se verrouiller chacun successivement sur une partie, ou sous-bande, de la bande effective B.

Dans une deuxième configuration de cet autre mode de réalisation, le dispositif de mesure radar peut comporter en outre un circuit de commande de chacun des oscillateurs verrouillés par injection configuré pour modifier, à chaque période du signal radar $RF_{IN}(t)$, la bande de fréquences de verrouillage de chacun des oscillateurs verrouillés par injection tel que, sur plusieurs périodes du signal radar $RF_{IN}(t)$, les bandes de fréquences de verrouillage des oscillateurs verrouillés par injection incluent, ensemble, la bande effective B.

Dans cette deuxième configuration, les ILOs peuvent être configurés pour se verrouiller successivement ou simultanément sur différentes parties de la bande effective B.

Lorsque le dispositif de mesure radar comporte le circuit de commande :

- le circuit de commande peut être configuré pour appliquer, en entrée de l'oscillateur verrouillé par injection ou de chacun des oscillateurs verrouillés par injection, une tension de contrôle dont la valeur détermine une fréquence centrale $f_c$ d'une bande de fréquences de verrouillage de l'oscillateur verrouillé par injection ou de chacun des oscillateurs verrouillé par injection, et/ou
- le circuit de commande peut être configuré pour modifier les valeurs de capacités commutées d'au moins un résonateur dans l'oscillateur verrouillé par injection ou dans chacun des oscillateurs verrouillés par injection.

Le dispositif de mesure radar peut comporter en outre au moins un amplificateur de puissance disposé entre l'antenne d'émission et le ou les premiers diviseurs de puissance.

Le dispositif de mesure radar peut comporter en outre au moins un amplificateur faible bruit interposé entre l'antenne de réception et le mélangeur ou, lorsque le dispositif de mesure radar comporte plusieurs deuxièmes diviseurs de puissance, entre l'antenne de réception et les deuxièmes diviseurs de puissance.

Le circuit de traitement de signal peut être configuré pour réaliser une compensation d'un déphasage entre le signal radar $RF_{IN}(t)$ et le ou les signaux délivrés en sortie du ou des oscillateurs verrouillés par injection.

Dans ce cas, le dispositif de mesure radar peut comporter en outre un circuit de rebouclage commandable configuré pour, dans une configuration de mesure du déphasage entre le signal radar $RF_{IN}(t)$ et le ou les signaux délivrés en sortie du ou des oscillateurs verrouillés par injection, connecter directement la première sortie du premier diviseur de puissance ou de l'un des premiers diviseurs de puissance à la première entrée du mélangeur ou de chacun des mélangeurs, et le circuit de traitement de signal peut être configuré pour réaliser une mesure du déphasage entre le signal radar $RF_{IN}(t)$ et le ou chacun des signaux délivrés en sortie du ou des oscillateurs verrouillés par injection, puis la compensation de déphasage en utilisant la ou les mesures de déphasage précédemment réalisées. Un tel circuit de rebouclage permet au dispositif de mesure radar de former un circuit de type BIST, ou couramment appelé en anglais «Built-In Self-Test ».

En variante, il est possible que le dispositif de mesure radar ne comporte pas un tel circuit de rebouclage et que le déphasage entre le signal radar $RF_{IN}(t)$ et le ou chacun des signaux délivrés en sortie du ou des oscillateurs verrouillés par injection soit mesuré différemment lors d'une phase de calibration du dispositif, par exemple par l'intermédiaire d'une cellule de retard programmable couplée à l'entrée ou la sortie du ou des ILOs ou en mettant en œuvre une mesure à partir d'un réflecteur disposé à une distance connue du dispositif.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de mesure radar selon un premier mode de réalisation ;
- la figure 2 représente un premier exemple d'un signal radar $RF_{IN}(t)$ généré dans un dispositif de mesure radar selon l'invention ;
- la figure 3 représente le spectre du premier exemple du signal radar $RF_{IN}(t)$ lorsque celui-ci est de type impulsionnel et ne comporte pas recouvrement spectral ;
- la figure 4 représente l'évolution dans le domaine temporel de la fréquence instantanée du premier exemple du signal radar $RF_{IN}(t)$ lorsque celui-ci est de type impulsionnel et ne comporte pas de recouvrement spectral ;
- la figure 5 représente le spectre du premier exemple du signal radar $RF_{IN}(t)$ lorsque celui-ci est de type impulsionnel et comporte du recouvrement spectral ;
- la figure 6 représente l'évolution dans le domaine temporel de la fréquence instantanée du premier exemple du signal radar $RF_{IN}(t)$ lorsque celui-ci est de type impulsionnel et comporte du recouvrement spectral ;
- les figures 7 et 8 représentent chacune l'évolution dans le domaine temporel de la fréquence instantanée d'un deuxième exemple de signal radar $RF_{IN}(t)$ de type FMCW généré dans le dispositif de mesure radar selon l'invention ;
- la figure 9 représente le spectre du deuxième exemple du signal radar $RF_{IN}(t)$ ;
- la figure 10 représente plusieurs signaux du dispositif de mesure radar selon le premier mode de réalisation ;
- la figure 11 représente un exemple de signal obtenu en sortie du circuit de traitement de signal du dispositif de mesure radar selon l'invention ;
- la figure 12 représente schématiquement un dispositif de mesure radar selon un deuxième mode de réalisation ;
- la figure 13 représente plusieurs signaux du dispositif de mesure radar selon le deuxième mode de réalisation ;
- la figure 14 représente schématiquement un dispositif de mesure radar selon un troisième mode de réalisation ;
- la figure 15 représente plusieurs signaux du dispositif de mesure radar selon le troisième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

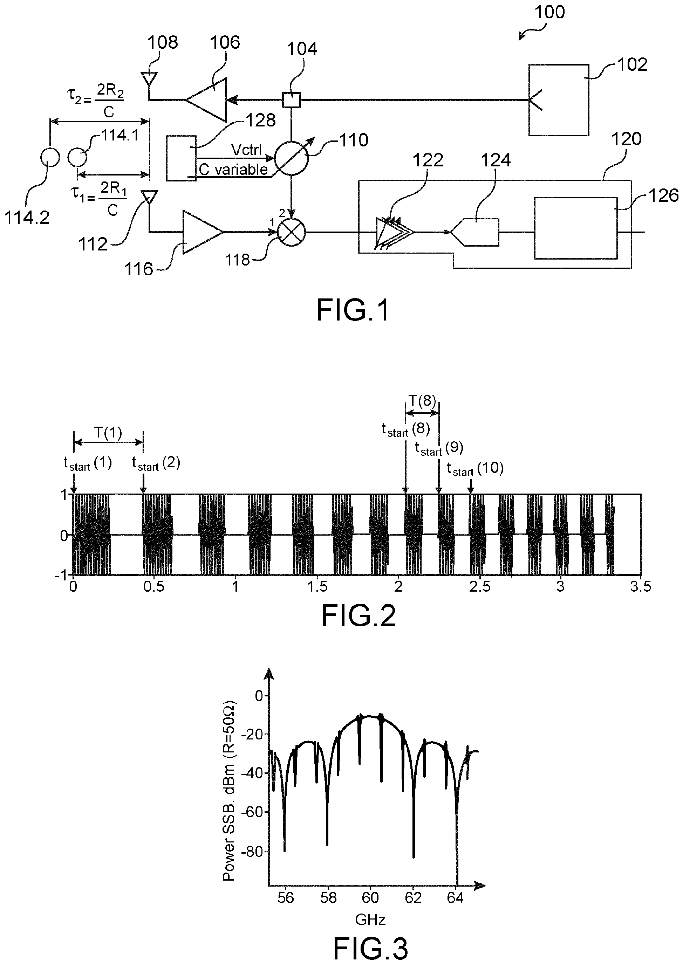

Un dispositif 100 de mesure radar selon un premier mode de réalisation est décrit ci-dessous en lien avec la figure 1.

Le dispositif 100 comporte un circuit 102 de génération d'un signal radar $RF_{IN}(t)$.

Selon un premier exemple de réalisation, le signal radar $RF_{IN}(t)$ généré par le circuit 102 correspond à un signal à train d'impulsions modulées de manière cohérente. Un exemple d'un tel signal impulsionnel est représenté, dans le domaine temporel, sur la figure 2, et s'exprime par la relation suivante :

$$RF_{IN(t)} = \sum_{n=1}^{n_{max}} \Pi \left( \frac{t - t_{start}(n) - \frac{T(n)}{4}}{\frac{T(n)}{2}} \right) \cdot e^{j2\pi f_a \left(t - t_{start}(n)\right)},$$

$$n \in \{1, \dots, n_{max}\}$$

Dans l'équation ci-dessus :

- $n_{max}$ correspond au nombre d'impulsions du signal radar $RF_{IN}(t)$ pour que la fréquence instantanée du signal $RF_{IN}(t)$ varie sur toute une bande effective B du signal radar $RF_{IN}(t)$ ;
- $t_{start}(n)$ correspond à l'instant de démarrage d'une $n^{ème}$ impulsion du signal $RF_{IN}(t)$;
- $f_a$ correspond à la fréquence de la porteuse du signal radar $RF_{IN}(t)$ ;
- $T(n)$ correspond à la durée d'une $n^{ème}$ impulsion du signal radar $RF_{IN}(t)$.

Le paramètre $t_{start}(n)$ s'exprime par la relation suivante :

$$t_{start}(n) = \frac{f_{in}' T_{rampe}}{B_{in}} \left( -1 + \sqrt{1 + \frac{2B_{in}}{f_{in}'^2 T_{ramp}} (n-1)} \right), n$$

$$\in \{1, \dots, n_{max}\}$$

Dans l'équation ci-dessus, $f_{in}'$ correspond à la fréquence fondamentale du début de la rampe, c'est-à-dire lorsque n = 1, du signal en bande basse ou signal modulant, et $T_{rampe}$ correspond à la durée avec laquelle la fréquence instantanée du signal $RF_{IN}(t)$ varie sur toute la bande effective B. La valeur de $f_{in}'$ est égale à $1/T(1)$.

Le paramètre $T(n)$ s'exprime par la relation suivante :

$$T(n) = t_{start}(n+1) - t_{start}(n), \qquad n \in \{1, \dots, n_{max}\}$$

Sur la figure 2, des exemples de $T(n)$ et $t_{start}(n)$ pour différentes valeurs de n sont représentées. De plus, sur l'exemple de la figure 2, $n_{max}$ = 15.

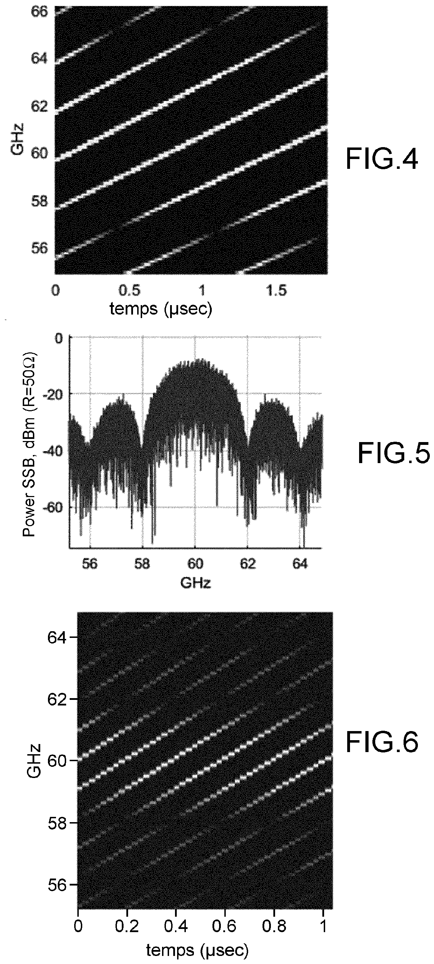

Lorsque $f_{in}' < \frac{B.f_a}{f_{in}'}$, le signal $RF_{IN}(t)$ est tel qu'il ne comporte pas de recouvrement spectral sur la durée $T_{rampe}$. Le spectre d'un tel signal $RF_{IN}(t)$, avec $f_a$ = 60 GHZ, est représenté sur la figure 3, et l'évolution dans le domaine temporel de la fréquence instantanée de ce signal $RF_{IN}(t)$, sur une durée égale à $T_{rampe}$, est représentée sur la figure 4. Dans ce cas, le signal radar $RF_{IN}(t)$ correspond à un signal multi-bandes alternées, c'est-à-dire qu'il va couvrir simultanément, au cours de la durée $T_{rampe}$, plusieurs bandes de fréquences dont les valeurs ne se recouvrent pas, ou ne se chevauchent pas, et qui définissent la bande effective B du signal radar $RF_{IN}(t)$.

Par contre, lorsque $f_{in}' \geq \frac{B.f_a}{f_{in}'}$, le signal $RF_{IN}(t)$ est tel qu'il comporte du recouvrement spectral sur la durée $T_{rampe}$. Le spectre d'un tel signal $RF_{IN}(t)$ est représenté sur la figure 5, et l'évolution dans le domaine temporel de la fréquence instantanée de ce signal $RF_{IN}(t)$, sur une durée égale à $T_{rampe}$, est représentée sur la figure 6. Dans ce cas, le signal radar $RF_{IN}(t)$ correspond à un signal multi-bandes simultanées, c'est-à-dire qu'il va couvrir simultanément, au cours de la durée $T_{rampe}$, plusieurs bandes de fréquences dont les valeurs se recouvrent, ou se chevauchent, et qui définissent la bande effective B du signal radar $RF_{IN}(t)$.

Selon un deuxième exemple de réalisation, le signal radar $RF_{IN}(t)$ généré par le circuit 102 correspond à un signal radar de type FMCW, c'est-à-dire un signal périodique modulé en fréquence sur au moins une partie $T_{rampe}$ d'une période T, correspondant, sur ladite au moins une partie $T_{rampe}$ de la période T, à un signal sinusoïdal dont la fréquence varie linéairement dans la bande effective B et dont l'amplitude alterne entre une première valeur et une deuxième valeur différente de la première valeur. Contrairement au premier exemple de réalisation précédemment décrit, le signal radar $RF_N(t)$ selon le deuxième exemple de réalisation correspond à un signal mono-bande, c'est-à-dire qu'il va couvrir, au cours de la durée $T_{rampe}$, une seule bande de fréquence qui correspond à sa bande effective B.

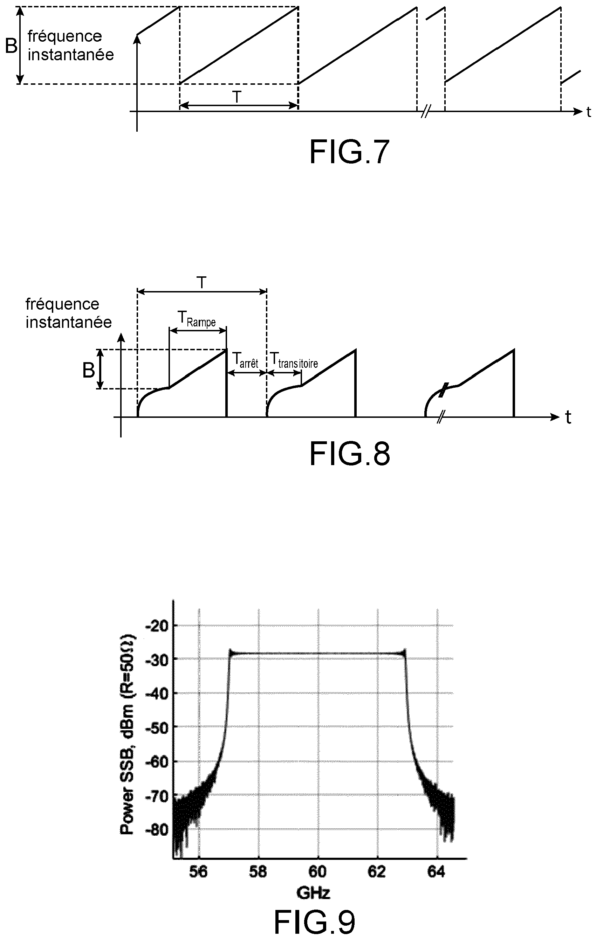

L'évolution dans le domaine temporel de la fréquence instantanée de ce deuxième exemple de réalisation du signal $RF_{IN}(t)$ est représentée, sur la figure 7 lorsque $T = T_{rampe}$, et sur la figure 8 lorsque $T \neq T_{rampe}$. Le spectre d'un tel signal $RF_{IN}(t)$ est représenté sur la figure 9.

Le signal radar $RF_{IN}(t)$ selon ce deuxième exemple de réalisation peut s'exprimer par la relation suivante :

$$RF_{IN(t)} = sin(2\pi f_c' t + 2\pi \alpha t^2), \forall\, t \in \left[0, T_{rampe}\right]$$

La pente du signal radar $RF_{IN}(t)$ est définie par le paramètre $\alpha$ représentatif de la rapidité de l'excursion en fréquence du signal radar sur un temps fixe. Ce paramètre $\alpha$ est représentatif de la tangente de l'angle formé par la rampe par rapport à l'axe du temps, et s'exprime en GHz/$\mu$s. Plus la valeur du paramètre $\alpha$ est grande, plus la variation de la fréquence instantanée du signal sur la bande effective B est obtenue rapidement (c'est-à-dire plus T sera petit) ou, pour une durée T fixe, plus la bande effective B est grande. Le paramètre $\alpha$ s'exprime par la relation $\alpha = B/(2T_{rampe})$.

La fréquence $f_c'$ du signal $RF_{IN}(t)$ au début de la rampe s'exprime par la relation $f_c' = f_c - \alpha.T_{rampe}$, avec $f_c$ correspondant à la fréquence de la porteuse du signal radar $RF_{IN}(t)$.

Le signal radar $RF_{IN}(t)$ délivré en sortie du circuit 102 est envoyé en entrée d'un diviseur de puissance 104. Une première sortie du diviseur de puissance 104 est couplée à une entrée d'un amplificateur de puissance 106 dont une sortie est couplée à une antenne d'émission 108. Une deuxième sortie du diviseur de puissance 104 est couplée à une entrée d'un oscillateur verrouillé par injection, ou ILO, 110. L'ILO 110 peut par exemple être réalisé comme décrit dans le document « A 60 GHz UWB impulse radio transmitter with integrated antenna in CMOS65nm SOI technology» de A. Siligaris et al., Silicon Monolithic Integrated Circuits in RF Systems (SiRF), 2011 IEEE 11th Topical Meeting on, pp. 153-156, 17-19 Jan. 2011.

Le dispositif 100 comporte également une antenne de réception 112 destinée à recevoir un signal radar réfléchi $RF_{IN\_REFL}(t)$ qui correspond au signal radar $RF_{IN}(t)$ a été émis par l'antenne d'émission 108 et réfléchi sur un ou plusieurs réflecteurs. La durée totale mise par le signal radar émis $RF_{IN}(t)$ pour atteindre un réflecteur, se réfléchir sur celui-ci et atteindre l'antenne de réception 112 se traduit par un décalage temporel du signal $RF_{IN\_REFL}(t)$ par rapport au signal $RF_{IN}(t)$ qui est proportionnel à la distance séparant le réflecteur de l'antenne de réception 112.

Sur l'exemple de la figure 1, deux réflecteurs 114.1 et 114.2 sont représentés, le réflecteur 114.1 étant plus proche de l'antenne de réception 112 que le réflecteur 114.2. Le retard $\tau_1$ engendré sur le signal radar se réfléchissant sur le premier réflecteur 114.1 est tel que $\tau_1 = \dfrac{2R_1}{c}$, avec $R_1$ correspondant à la distance entre le premier réflecteur 114.1 et l'antenne de réception 112, et c correspondant à la vitesse de la lumière dans le vide. Le retard $\tau_2$ engendré sur le signal radar se réfléchissant sur le deuxième réflecteur 114.2 est tel que $\tau_2 = \dfrac{2R_2}{c}$, avec $R_2$ correspondant à la distance entre le deuxième réflecteur 114.2 et l'antenne de réception 112. Dans le cas représenté sur la figure 1, les distances $R_1$ et $R_2$ sont telles que $R_2 > R_1$, et donc les retards $\tau_1$ et $\tau_2$ sont tels que $\tau_2 > \tau_1$.

Le signal $RF_{IN\_REFL}(t)$ est envoyé en entrée d'un amplificateur faible bruit 116 dont une sortie est couplée à une première entrée d'un mélangeur 118. Une deuxième entrée du mélangeur 118 est couplée à une sortie de l'ILO 110. Une sortie du mélangeur 118 est couplée à une entrée d'un circuit de traitement de signal 120.

Dans l'exemple de réalisation de la figure 1, le circuit de traitement de signal 120 comporte un circuit de filtrage 122 réalisant un filtrage passe-bande du signal délivré en sortie du mélangeur 118. Selon un exemple de réalisation, le circuit de filtrage 122 comporte plusieurs étages de gain supérieur à 1 couplés en série et réalisant ensemble ce filtrage passe-bande. La sortie du circuit de filtrage 122 est couplée à une entrée d'un convertisseur analogique - numérique 124.

La sortie du convertisseur 124 est couplée à l'entrée d'un circuit 126 configuré pour réaliser un traitement du signal obtenu après la mise en œuvre de la conversion analogique - numérique afin de ne conserver que des parties de ce signal pendant lesquelles l'ILO 110 est verrouillé sur une partie de la bande effective B. Quand le signal $RF_{IN\_REFL}(t)$ reçu par l'antenne de réception 112 se mélange avec le signal obtenu à la sortie de l'ILO 110, une convolution des spectres de ces deux signaux se produit. En fonction de la bande de fréquences considérée, le résultat de cette convolution est :

- dans la bande entre 0 et $f_{in}$, le résultat de sélection de l'unique bande B issue de l'ILO 110;
- dans la bande entre $f_{in}$ et $+\infty$, la convolution du signal délivré en sortie de ILO 110 avec d'autres rampes dans d'autres bandes.

La fréquence $f_{in}$ correspond à l'écart de fréquence maximum entre les signaux émis et reçus, pour une portée radar donnée $D_{max}$, c'est-à-dire $f_{in} = \alpha.T_{max} = \alpha.D_{max}/c$, avec $T_{max}$ valeur maximale de T.

Par la suite, cette partie se trouvant dans la bande entre $f_{in}$ et $+\infty$, est filtrée par un filtre analogique du circuit 126 et seule la partie utile du spectre dans la bande d'acquisition est conservée.

Ce circuit 126 réalise également une égalisation, ou compensation, de phase, et une transformée de Fourrier discrète, par exemple sous la forme d'une FFT, du signal traité. L'égalisation de phase s'effectue en connaissant le profil de puissance du déphasage du signal traité en fonction de la fréquence et en appliquant l'inverse de ce profil au signal. Le circuit 126 réalise également une égalisation d'amplitude permettant de compenser la déformation de l'amplitude du signal due à la forme du spectre du signal d'enveloppe.

Dans ce premier mode de réalisation, pour que l'ILO 110 se verrouille sur plusieurs parties de la bande effective B (qui est plus large que la bande de verrouillage de l'ILO 110), le dispositif 100 comporte un circuit de commande 128 configuré pour modifier, à chaque période T du signal radar $RF_{IN}(t)$, la bande de fréquences de verrouillage de l'ILO 110 tel que, sur plusieurs périodes successives du signal radar $RF_{IN}(t)$, les bandes de fréquences de verrouillage de l'ILO 110 incluent, ensemble, la bande effective B. Pour modifier la bande de fréquences de verrouillage de l'ILO 110, le circuit de commande 128 est configuré pour appliquer, sur une entrée de commande de l'ILO 110, une tension de contrôle, appelée Vctrl, dont la valeur détermine la fréquence centrale $f_c$ de la bande de fréquences de verrouillage de l'ILO 110. Il est également possible, de manière alternative ou complémentaire de la variation de la tension de contrôle Vctrl, que le circuit de commande 128 soit configuré pour modifier les valeurs de capacités commutées, formant ensemble une capacité de valeur C, d'un résonateur par exemple de type LC de l'ILO 110. Par exemple, la fréquence d'oscillation propre de l'ILO 110 peut être ainsi modifiée dans une gamme pouvant aller jusqu'à plus ou moins 30 % par rapport à sa fréquence porteuse nominale.

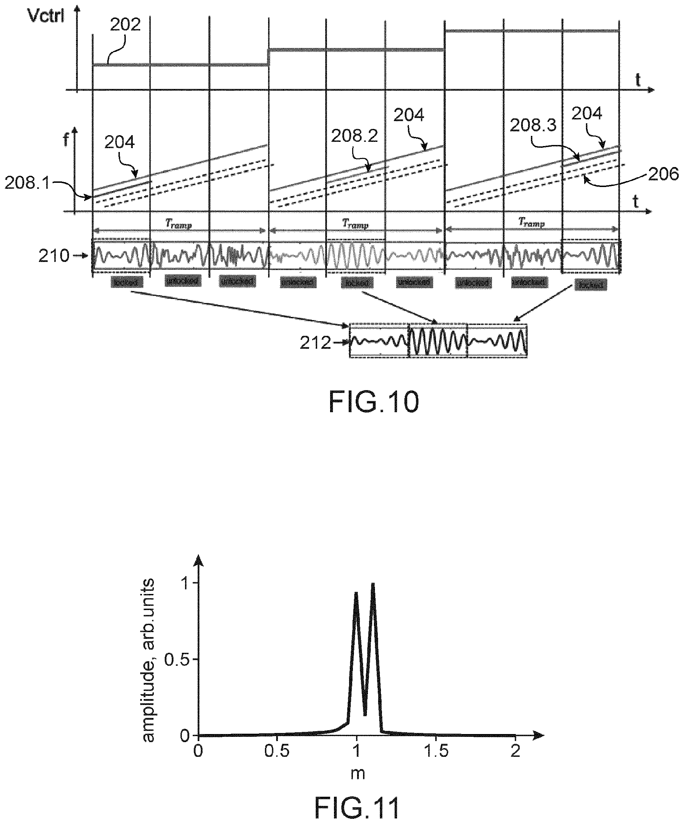

Ce fonctionnement du dispositif 100 selon le premier mode de réalisation est illustré par la figure 10 qui illustre plusieurs signaux du dispositif 100. Le signal $V_{ctrl}$, référencé 202, correspond à la tension de commande appliquée sur l'ILO 110 et dont la valeur fait varier la bande de fréquences de verrouillage de l'ILO 110. L'évolution dans le domaine temporel de la fréquence instantanée du signal radar $RF_{IN}(t)$ est également représentée sur la figure 10 et est désignée par la référence 204. La référence 206 désigne des signaux échos du signal $RF_{IN}(t)$ qui sont représentés en traits pointillés. Les références 208.1, 208.2 et 208.3 désignent l'évolution dans le domaine temporel de la fréquence instantanée du signal délivré en sortie de l'ILO 110 lorsque celui-ci est verrouillé sur le signal radar $RF_{IN}(t)$ sur différentes bandes de fréquences de verrouillage. La variation de la bande de verrouillage de l'ILO 110 est obtenu via les paramètres (valeur de la tension de commande Vctrl et/ou valeurs des capacités commutées) appliqués par le circuit de commande 128 sur l'ILO 110. La référence 210 désigne le signal obtenu en sortie du circuit de filtrage 122. Le signal désigné par la référence 212 correspond au signal obtenu après le traitement appliqué par le circuit 126 et qui est formé des parties du signal 210 obtenues lorsque l'ILO 110 est verrouillé sur différentes parties de la bande effective B.

La figure 11 représente le signal obtenu après la transformée de Fourrier discrète appliquée par le circuit 126, et qui correspond au signal délivré en sortie du circuit de traitement de signal 120. La mesure des deux réflecteurs 114.1, 114.2 sur lesquels le signal $RF_{IN}(t)$ est réfléchi est bien visible grâce aux deux pics obtenus sur ce signal et dont la valeur sur l'axe des abscisses correspond à la distance de chacun des réflecteurs 114.1, 114.2 par rapport à l'antenne de réception 112 du dispositif 100.

Puisque le signal radar $RF_{IN}(t)$ a sa fréquence qui varie avec le temps, cette variation en fréquence induit des conditions de déphasage qui sont aussi variables dans le temps. Cette évolution du déphasage dans la bande de verrouillage de l'ILO 110 est donc caractérisée pour effectuer la post-calibration de ce déphasage à posteriori de la mesure du signal radar. Pour cela, le dispositif 100 peut comporter un circuit de rebouclage commandable (non visible sur la figure 1) configuré pour, dans une configuration de mesure du déphasage entre le signal radar $RF_{IN}(t)$ et le signal délivré en sortie de l'ILO 110, connecter directement la première sortie du diviseur de puissance 104 à la première entrée du mélangeur 118. Le circuit de traitement de signal 120 réalise, dans cette configuration de mesure du déphasage, une mesure du déphasage entre le signal radar $RF_{IN}(t)$ et le signal délivré en sortie de l'ILO 110, puis, lors d'un fonctionnement du dispositif 100 dans une configuration de mesure radar où le circuit de rebouclage ne connecte pas la première sortie du diviseur de puissance 104 à la première entrée du mélangeur 118, une compensation du déphasage entre le signal radar $RF_{IN}(t)$ et le signal délivré en sortie de l'ILO 110 en utilisant la mesure de déphasage précédemment réalisée. En variante, il est possible que le dispositif 100 ne comporte pas un tel circuit de rebouclage et que le déphasage entre le signal radar $RF_{IN}(t)$ et le signal délivré en sortie de l'ILO 110 soit mesuré dans une partie basse fréquence du signal appliqué en entrée du circuit de traitement du signal 120 et qui correspond à une fuite due au couplage entre la partie émission du signal radar $RF_{IN}(t)$ et la partie réception du signal radar réfléchi $RF_{IN\_REFL}(t)$ du dispositif 100.

Dans ce premier mode de réalisation, la bande de fréquences de verrouillage de l'ILO 110 est modifiée dynamiquement grâce à la modification de la valeur de la tension de commande Vctrl et/ou de la capacité variable C du résonateur de l'ILO 110 sur plusieurs périodes T du signal $RF_{IN}(t)$. Ce premier mode de réalisation permet donc au dispositif 100 de fonctionner sur une large bande effective B, avec toutefois en contrepartie une certaine durée d'acquisition du signal radar réfléchi $RF_{IN\_REFL}(t)$ pour parcourir toute la bande effective B du fait que le dispositif 100 ne comporte qu'un seul ILO 110 pour balayer cette bande effective B.

Dans ce premier mode de réalisation, il est possible de réaliser un changement relatif de la fréquence porteuse Δf de l'ILO 110 jusqu'à Δf/fc = 5%, avec fc correspondant à la fréquence centrale de la bande effective B, et balayer ainsi toute la bande effective B en verrouillant l'ILO 110 sur plusieurs parties de la bande effective B. Ainsi, en considérant une bande de fréquences de verrouillage de l'ILO 110 centrée autour de la fréquence 1,2 GHz, le dispositif 110 est capable d'acquérir un signal radar sur une bande de fréquences relative qui dépasse 5 % de la bande effective B. Par exemple, avec un ILO 110 pouvant se verrouiller sur une bande de fréquences de 1,2 GHz, et avec un signal radar $RF_{IN}(t)$ de bande effective B égale à 3,6 GHz allant de 59,4 GHz à 63 GHz, l'ILO 110 sera commandé pour se verrouiller sur trois bandes de fréquences de verrouillage différentes avec trois décalages de sa fréquence porteuse aux fréquences $f_c$ égales à 60 GHZ, 61.2GHz et 62.4GHz, et couvrir ainsi toute la bande effective B avec ce seul ILO 110. Dans ce cas, le dispositif 100 forme un récepteur radar avec une bande relative égale à 6%.

Avec ce premier mode de réalisation, en considérant que le signal radar $RF_{IN}(t)$ généré par le circuit 102 correspond à un signal à train d'impulsions modulées de manière cohérente, avec ou sans recouvrement spectral, ayant une fréquence centrale $f_c$ égale à 60 GHz, que l'ILO 110 est capable de se verrouiller sur une bande de fréquences inférieure ou égale 1,2 GHz et que l'ILO 110 est commandé pour se verrouiller sur quatre bandes de fréquences de verrouillage différentes en décalant sa fréquence porteuse, la résolution spatiale ΔR pouvant être obtenue est supérieure à 3,6cm, et la durée d'acquisition est de l'ordre de 1 μs. La bande effective B maximale pouvant être obtenue avec le dispositif 100 selon le premier mode réalisation est de 4,2 GHz.

Un autre avantage du dispositif de mesure radar selon ce premier mode de réalisation est que sa consommation électrique est réduite en raison de l'utilisation d'un seul canal fréquentiel, d'un seul ILO, et d'une seule voie en bande de base du convertisseur analogique - numérique.

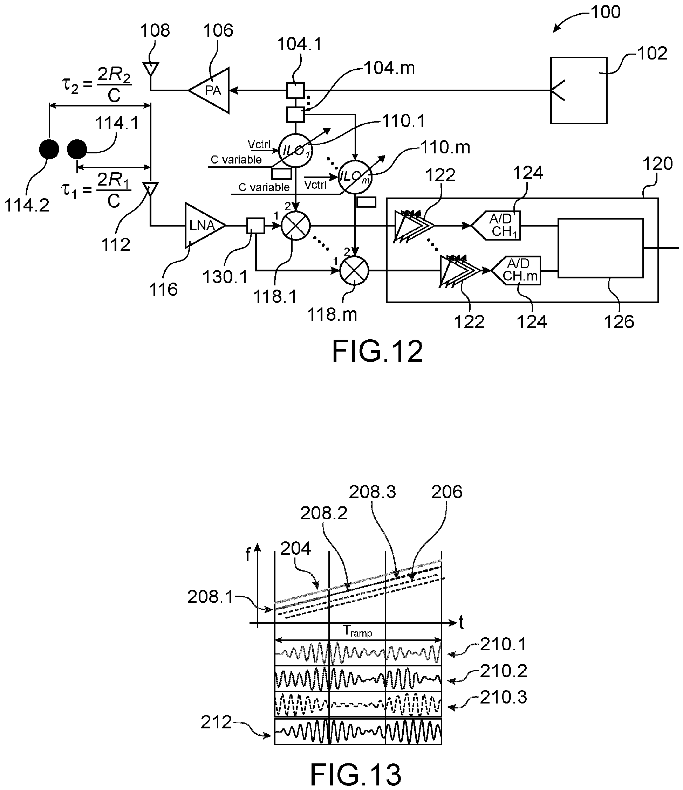

Un dispositif 100 selon un deuxième mode de réalisation est décrit ci-dessous en lien avec la figure 12.

Par rapport au premier mode de réalisation, le dispositif 100 selon ce deuxième mode de réalisation comporte m ILOs 110.1-110.m, avec m nombre entier supérieur à 1. Sur la figure 12, deux ILO référencés 110.1 et 110.m sont représentés.

Le dispositif 100 selon ce deuxième mode de réalisation comporte également m diviseurs de puissance 104, appelés premiers diviseurs de puissance, configurés pour appliquer le signal radar $RF_{IN}(t)$ sur l'antenne d'émission 108 (par l'intermédiaire de l'amplificateur de puissance sur l'exemple de réalisation de la figure 12) et sur une entrée de chacun des ILOs 110.1-110.m. Sur la figure 12, deux premiers diviseurs de puissance 104.1 et 104.m sont représentés.

Sur l'exemple de réalisation représenté sur la figure 12, l'entrée du diviseur de puissance 104.1 est couplée à la sortie du circuit 102, une première sortie du diviseur de puissance 104.1 est couplée à l'entrée de l'amplificateur de puissance 106 et une deuxième sortie du diviseur de puissance 104.1 est couplée à l'entrée du diviseur de puissance 104.m. Une première sortie du diviseur de puissance 104.m est couplée à l'entrée de l'ILO 110.1 et une deuxième sortie du diviseur de puissance 104.m est couplée à l'entrée de l'ILO 110.m. En variante, les premiers diviseurs de puissance 104.1-104.m et les ILOs 110.1-110.m peuvent être couplés différemment que sur l'exemple représenté sur la figure 12.

Le dispositif 100 selon le deuxième mode de réalisation comporte également plusieurs mélangeurs 118.1-118.m comprenant chacun une deuxième entrée couplée à une sortie d'un des ILOs 110.1-110.m et une sortie couplée à une entrée du circuit de traitement de signal 120. Ce dispositif 100 comporte également m-1 deuxièmes diviseurs de puissance 130.1-130.(m-1) configurés pour appliquer le signal radar réfléchi $RF_{IN\_REFL}(t)$ sur une deuxième entrée de chacun des mélangeurs 118.1-118.m. Dans l'exemple de réalisation représenté sur la figure 12, un seul deuxième diviseur de puissance 130.1 est représenté, celui-ci comprenant une entrée couplée à la sortie de l'amplificateur faible bruit 116, une première sortie couplée à la première entrée du mélangeur 118.1 et une deuxième sortie couplée à la première entrée du mélangeur 118.m.

Sur l'exemple de réalisation représenté sur la figure 12, le circuit de traitement de signal 120 comporte m entrées amenant chacune le signal de sortie d'un des mélangeurs 118.1-118.m dans un circuit de filtrage 122 et un convertisseur analogique - numérique 124 dédiés à ce signal. Les sorties de tous les convertisseurs analogique - numérique 124 sont couplées à des entrée du circuit 126.

Dans ce deuxième mode de réalisation, le signal radar $RF_{IN}(t)$ est donc appliqué en entrée de chaque ILO 110.1-110.m de manière indépendante. Chacun des ILOs 110.1-110.m va recopier sur sa sortie le signal radar $RF_{IN}(t)$ émis seulement dans la bande de verrouillage propre à chacun des ILOs 110.1-110.m et qui est définie par les propriétés du résonateur de l'ILO et de la valeur de la tension de commande appliquée sur celui-ci. Chacun des ILOs 110.1-110.m filtre donc le signal radar $RF_{IN}(t)$ dans sa bande de fréquences d'intérêt. Ensuite, après avoir mélangé le signal de sortie de chacun des ILOs 110.1-110.m avec le signal radar réfléchi $RF_{IN\_REFL}(t)$ et ainsi transposé en fréquence le signal radar réfléchi $RF_{IN\_REFL}(t)$ dans la bande de fréquence de verrouillage de chaque ILO, des signaux basses fréquences sont obtenus à partir desquels des informations de distance et de vitesse relative du ou des réflecteurs vis-à-vis de l'antenne de réception 112 du dispositif de mesure radar 100 sont obtenues. Ainsi, le fait de considérer la réception de plusieurs bandes de fréquence par différents ILOs permet d'utiliser un signal radar $RF_{IN}(t)$ dont la bande effective B est plus importante tout en conservant une durée de réception plus courte que dans le premier mode de réalisation.

Comme dans le premier mode de réalisation, le signal radar $RF_{IN}(t)$ utilisé dans le dispositif 100 selon ce deuxième mode de réalisation peut correspondre l'un des signaux précédemment décrits en lien avec les figures 2 à 9. Lorsque le signal radar $RF_{IN}(t)$ correspond au signal impulsionnel précédemment décrit et comportant un recouvrement spectral sur la durée $T_{rampe}$, il est possible d'utiliser chacun des ILOs 110.1 - 110.m de manière à maximiser son temps de verrouillage sur une durée de rampe $T_{rampe}$.

Dans ce deuxième mode de réalisation, le circuit 120 peut être configuré pour mettre en œuvre:

- un filtrage passe-bande de chacun des signaux délivrés en sortie des mélangeurs 118.1-118.m, puis
- une conversion analogique - numérique de chacun des signaux obtenus après la mise en œuvre du filtrage, puis
- un traitement des signaux obtenus après la mise en œuvre de la conversion analogique - numérique, ne conservant que des parties de chacun de ces signaux pendant lesquelles chacun des oscillateurs verrouillés par injection est verrouillé sur une partie de la bande effective B, puis
- une transformée de Fourrier discrète du signal obtenu après la mise en œuvre du traitement précédent.

Le signal obtenu en sortie de la transformée de Fourrier discrète est représentatif de la distance entre l'antenne de réception 112 et le ou les réflecteurs sur lesquels le signal radar $RF_{IN}(t)$ s'est réfléchi.

Dans ce deuxième mode de réalisation, chacun des ILOs 110.1-110.m est configuré tel que sa bande de fréquences de verrouillage soit différente de celles des autres ILOs 110.1-110.m et que les bandes de fréquences de verrouillage des ILOs 110.1-110.m couvrent, ensemble, la bande effective B. Les ILOs 110.1-110.m sont configurés pour se verrouiller chacun successivement sur une sous-bande de la bande effective B. De plus, dans ce deuxième mode de réalisation, les paramètres (valeurs de la tension de commande Vctrl et des capacités commutées du résonateur) de chacun des ILOs 110.1-110.m sont constants, ce qui signifie que la bande de verrouillage de chacun des ILOs 110.1-110.m ne varie pas et est la même pour chaque période T du signal radar $RF_{IN}(t)$ (contrairement au premier mode de réalisation dans lequel la bande de verrouillage de l'ILO 110 est différente sur plusieurs périodes T du signal radar $RF_{IN}(t)$).

Ce fonctionnement du dispositif 100 selon le deuxième mode de réalisation est illustré par la figure 13 qui illustre plusieurs signaux du dispositif 100 lorsque celui-ci comporte trois ILOs 110.1-110.3. Comme sur la figure 10 précédemment décrite en lien avec le premier mode de réalisation, l'évolution dans le domaine temporel de la fréquence instantanée du signal radar $RF_{IN}(t)$ est désignée par la référence 204. La référence 206 désigne des signaux échos du signal $RF_{IN}(t)$. Les références 208.1, 208.2 et 208.3 désignent chacune respectivement l'évolution dans le domaine temporel de la fréquence instantanée du signal délivré en sortie de l'un des ILOs 110.1-110.3 lorsque celui-ci est verrouillé sur le signal radar $RF_{IN}(t)$. Les références 210.1, 210.2 et 210.3 désignent les signaux obtenus en sortie de chacun des circuits de filtrage 122. Le signal désigné par la référence 212 correspond au signal obtenu après le prétraitement appliqué par le circuit 126 et qui est formé des parties des signaux 210.1-210.3 obtenues lorsque chacun des ILOs 110.1-110.3 est verrouillé sur une partie de la bande effective B.

Dans ce deuxième mode de réalisation, la valeur de m, c'est-à-dire le nombre d'ILOs, est de préférence compris entre 2 et 4, du fait qu'un trop grand nombre de diviseurs de puissance 104.1-104.m conduirait à appliquer en entrée des ILOs 110.1-110.m des signaux d'amplitude trop faible pour que les ILOs 110.1-110.m puissent se verrouiller à la fréquence de ces signaux.

Avec ce deuxième mode de réalisation, en considérant que le signal radar $RF_{IN}(t)$ généré par le circuit 102 correspond à un signal à train d'impulsions modulées de manière cohérente ayant une fréquence centrale $f_c$ égale à 60 GHz et qui ne comporte pas de recouvrement spectral, que chacun des ILOs 110.1-110.m soit capable de se verrouiller sur une bande de fréquences inférieure ou égale 1,2 GHz et que le dispositif 100 comporte au plus quatre ILOs, la résolution spatiale ΔR pouvant être obtenue est supérieure à 12,5 cm, la durée d'acquisition obtenue est de l'ordre de 250 ns et la bande effective B maximale pouvant être obtenue est de 1,2 GHz. Lorsque le signal radar $RF_{IN}(t)$ comporte du recouvrement spectral, la résolution spatiale ΔR pouvant être obtenue est supérieure à 3,1 cm, la durée d'acquisition obtenue est de l'ordre de 1 μs et la bande effective B maximale pouvant être obtenue est de 4,8 GHz.

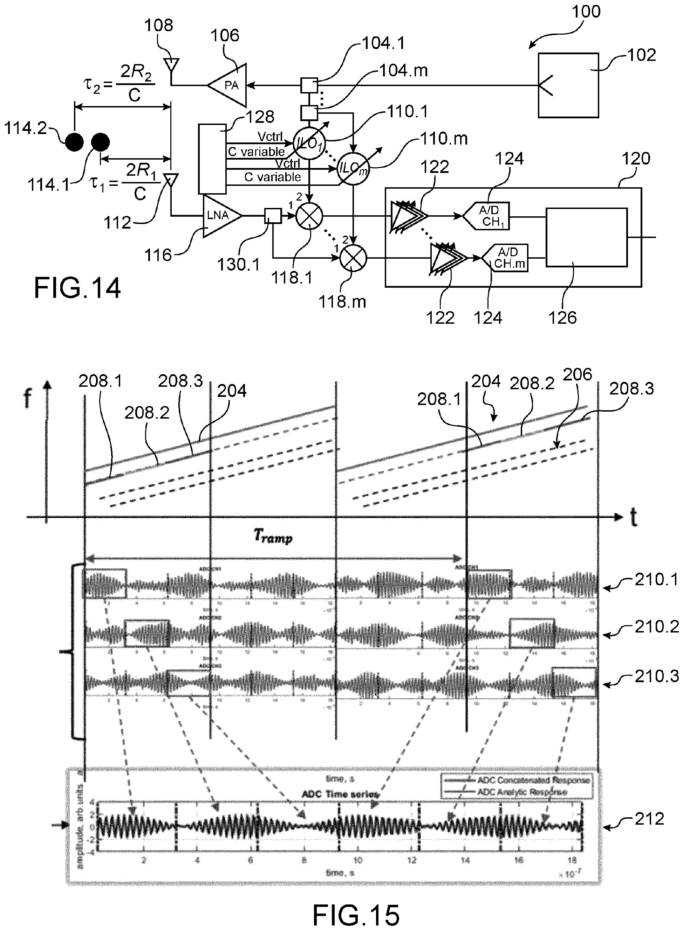

Un dispositif 100 selon un troisième mode de réalisation est décrit ci-dessous en lien avec la figure 14.

Ce dispositif 100 selon le troisième mode de réalisation comporte tous les éléments du dispositif 100 selon le deuxième mode de réalisation précédemment décrit. La différence entre le dispositif 100 selon le troisième mode de réalisation et celui selon le deuxième mode de réalisation est que les paramètres (valeurs de la tension de commande Vctrl et/ou des capacités commutées du résonateur) de chacun des ILOs 110.1-110.m ne sont constants et sont ajustés par le circuit de commande 128, la bande de verrouillage de chacun des ILOs 110.1-110.m variant sur plusieurs périodes T du signal radar $RF_{IN}(t)$, comme dans le premier mode de réalisation.

Ce fonctionnement du dispositif 100 selon le troisième mode de réalisation est illustré par la figure 15 qui illustre plusieurs signaux du dispositif 100 lorsque celui-ci comporte trois ILOs 110.1-110.3. Comme sur les figures 10 et 13 précédemment décrites, l'évolution dans le domaine temporel de la fréquence instantanée du signal radar $RF_{IN}(t)$ est désignée par la référence 204. La référence 206 désigne des signaux échos du signal $RF_{IN}(t)$. Les références 208.1, 208.2 et 208.3 désignent chacune respectivement l'évolution dans le domaine temporel de la fréquence instantanée du signal délivré en sortie de l'un des ILOs 110.1-110.3 lorsque celui-ci est verrouillé sur le signal radar $RF_{IN}(t)$. Dans l'exemple représenté sur cette figure 15, chacun des ILOs 110.1-110.3 se verrouille sur une première sous-bande de la bande effective B lors d'une première période T du signal radar $RF_{IN}(t)$, et se verrouille sur une deuxième sous-bande de la bande effective B, différente de la première sous-bande, lors d'une deuxième période T du signal radar $RF_{IN}(t)$. Ainsi, sur ces deux périodes du signal radar $RF_{IN}(t)$, la totalité de la bande effective B est couverte par les sous-bandes de verrouillage des ILOs du dispositif 100. Les références 210.1, 210.2 et 210.3 désignent les signaux obtenus en sortie de chacun des circuits de filtrage 122. Le signal désigné par la référence 212 correspond au signal obtenu après le prétraitement appliqué par le circuit 126 et qui est formé des parties des signaux 210.1-210.3 obtenues lorsque chacun des ILOs 110.1-110.3 est verrouillé sur une partie de la bande effective B.

Comme dans le deuxième mode de réalisation, la valeur de m, c'est-à-dire le nombre d'ILOs, du dispositif 100 selon ce troisième mode de réalisation est de préférence compris entre 2 et 4. En outre, le nombre de sous-bandes sur lesquelles chaque ILO 110 est destiné à se verrouiller est par exemple compris entre 2 et 16.

A titre d'exemple, le dispositif 100 selon ce troisième mode de réalisation permet d'exploiter un signal radar $RF_{IN}(t)$ dont la bande effective B va de 59 GHz à 65 GHz, permettant au dispositif radar 100 d'avoir une résolution égale à 2,5 cm lorsque chacun des ILOs 110.1-110.3 couvre deux sous-bandes distinctes réparties sur deux périodes T distinctes du signal radar $RF_{IN}(t)$. Il est possible de couvrir une bande de fréquences plus importante en augmentant le nombre de périodes sur lesquelles la bande de verrouillage de chaque ILO varie.

Avec ce troisième mode de réalisation, en considérant que le signal radar $RF_{IN}(t)$ généré par le circuit 102 correspond à un signal à train d'impulsions modulées de manière cohérente, avec ou sans recouvrement spectral, ayant une fréquence centrale $f_c$ égale à 60 GHz, que chacun des ILOs 110.1-110.n soit capable de se verrouiller sur une bande de fréquences inférieure ou égale 1,2 GHz et que le dispositif 100 comporte au plus quatre ILOs, la résolution spatiale $\Delta R$ pouvant être obtenue sera supérieure à 0,78 cm, et la durée d'acquisition sera de l'ordre de 4 $\mu$s. La bande effective B maximale pouvant être obtenue avec le dispositif 100 selon le premier mode réalisation est de 19,2 GHz.

Dans tous les modes de réalisation précédemment décrits, il est possible que le ou les ILOs du dispositif 100 soient utilisés pour balayer toute la bande effective B du signal radar $RF_{IN}(t)$, ou bien seulement une partie de cette bande effective B.

## Revendications

1. Dispositif de mesure radar (100) comportant au moins :

   - un circuit de génération d'un signal radar $RF_{IN}(t)$ (102) ;
   - une antenne d'émission (108) ;
   - un oscillateur verrouillé par injection (110, 110.1-110.m) ;
   - un premier diviseur de puissance (104, 104.1-104.m) comprenant une entrée couplée à une sortie du circuit de génération du signal radar $RF_{IN}(t)$ (102), une première sortie couplée à l'antenne d'émission (108), et une deuxième sortie couplée à une entrée de l'oscillateur verrouillé par injection (110, 110.1-110.m) qui est configuré pour se verrouiller sur une partie d'une bande effective B du signal radar $RF_{IN}(t)$ ;
   - une antenne de réception (112) destinée à recevoir un signal radar réfléchi $RF_{IN\_REFL}(t)$;
   - un mélangeur (118, 118.1-118.m) comprenant une première entrée couplée à l'antenne de réception (112), une deuxième entrée couplée à une sortie de l'oscillateur verrouillé par injection (110, 110.1-110.m) ;
   - un circuit de traitement de signal (120) dont une entrée est couplée à une sortie du mélangeur (118, 118.1 - 118.m), et configuré pour fournir un signal représentatif d'une distance entre l'antenne de réception (112) et au moins un réflecteur (114.1, 114.2) sur lequel le signal radar $RF_{IN}(t)$ s'est réfléchi.

2. Dispositif de mesure radar (100) selon la revendication 1, dans lequel le circuit de génération du signal radar $RF_{IN}(t)$

(102) est configuré pour générer le signal radar RF$_{IN}$(t) correspondant à :

- un signal périodique modulé en fréquence sur au moins une partie T$_{rampe}$ d'une période T dudit signal, correspondant, sur ladite au moins une partie T$_{rampe}$ de la période T, à un signal sinusoïdal dont la fréquence varie linéairement dans la bande effective B et dont l'amplitude alterne entre une première valeur et une deuxième valeur différente de la première valeur, ou
- un train d'impulsions dont la modulation fréquentielle est définie par la position temporelle du début de chaque impulsion, par le déphasage relatif du signal au début de chaque impulsion et par la largeur de chaque impulsion.

3. Dispositif de mesure radar (100) selon la revendication 2, dans lequel le signal radar RF$_{IN}$(t) correspondant à un train d'impulsions est tel que :

$$RF_{IN(t)} = \sum_{n=1}^{n_{max}} \Pi\left(\frac{t - t_{start}(n) - \frac{T(n)}{4}}{\frac{T(n)}{2}}\right) \cdot e^{j2\pi f_a(t - t_{start}(n))}, \; n \in$$

$$\{1, \ldots, n_{max}\}$$

avec

$f_a$ correspondant à la fréquence de la porteuse du signal radar RF$_{IN}$(t);
$T(n) = t_{start}(n+1) - t_{start}(n)$, et qui correspond à la durée d'une n$^{ième}$ impulsion du signal radar RF$_{IN}$(t) ;

$$t_{start}(n) = \frac{f_{in}'T_{rampe}}{B_{in}}\left(-1 + \sqrt{1 + \frac{2B_{in}}{f_{in}'^2 T_{ramp}}(n-1)}\right), n \in$$

$\{1, \ldots, n_{max}\}$, et qui correspondent aux moments du démarrage de chaque n$^{ième}$ impulsion du signal radar RF$_{IN}$(t) ;
$f_{in}'$ correspondant à la fréquence fondamentale du signal modulant lorsque n = 1 ;
$n_{max}$ correspondant au nombre d'impulsions dans le signal radar RF$_N$(t) sur la bande effective B.

4. Dispositif de mesure radar (100) selon l'une des revendications précédentes, comportant en outre un circuit de commande (128) de l'oscillateur verrouillé par injection (110, 110.1-110.m) configuré pour modifier, à chaque période du signal radar RF$_{IN}$(t), la bande de fréquences de verrouillage de l'oscillateur verrouillé par injection (110, 110.1-110.m) tel que, sur plusieurs périodes successives du signal radar RF$_{IN}$(t), les bandes de fréquences de verrouillage de l'oscillateur verrouillé par injection (110, 110.1-110.m) couvrent, ensemble, la bande effective B.

5. Dispositif de mesure radar (100) selon l'une des revendications précédentes, dans lequel le circuit de traitement de signal (120) est configuré pour mettre en œuvre:

- un filtrage passe-bande du signal délivré en sortie du mélangeur (118, 118.1-118.m), puis
- une conversion analogique - numérique du signal obtenu après la mise en œuvre du filtrage passe-bande, puis
- un traitement du signal obtenu après la mise en œuvre de la conversion analogique - numérique, ne conservant que des parties de ce signal pendant lesquelles l'oscillateur verrouillé par injection (110, 110.1-110.m) est verrouillé sur une partie de la bande effective B, puis
- une transformée de Fourrier discrète du signal obtenu après la mise en œuvre du traitement ne conservant que des parties du signal pendant lesquelles l'oscillateur verrouillé par injection est verrouillé sur une partie de la bande effective B.

6. Dispositif de mesure radar (100) selon l'une des revendications 1 à 3, comportant :

- plusieurs oscillateurs verrouillés par injection (110.1-110.m) ;
- plusieurs premiers diviseurs de puissance (104.1-104.m) configurés pour appliquer le signal radar RF$_{IN}$(t) sur l'antenne d'émission (108) et sur une entrée de chacun des oscillateurs verrouillés par injection (110.1-110.m) ;

- plusieurs mélangeurs (118.1-118.m) comprenant chacun une deuxième entrée couplée à une sortie d'un des oscillateurs verrouillés par injection (110.1-110.m) et une sortie couplée à une entrée du circuit de traitement de signal (120) ;
- un ou plusieurs deuxièmes diviseurs de puissance (130.1) configurés pour appliquer le signal radar réfléchi $RF_{IN\_REFL}(t)$ sur une première entrée de chacun des mélangeurs (118.1-118.m).

**7.** Dispositif de mesure radar (100) selon la revendication 6, dans lequel le circuit de traitement de signal (120) est configuré pour mettre en œuvre:

- un filtrage passe-bande de chacun des signaux délivrés en sortie des mélangeurs (118.1-118.m), puis
- une conversion analogique - numérique de chacun des signaux obtenus après la mise en œuvre du filtrage, puis
- un traitement des signaux obtenus après la mise en œuvre de la conversion analogique - numérique, ne conservant que des parties de chacun de ces signaux pendant lesquelles chacun des oscillateurs verrouillés par injection (110.1-110.m) est verrouillé sur une partie de la bande effective B, puis
- une transformée de Fourrier discrète d'un signal obtenu après la mise en œuvre du traitement ne conservant que des parties de chacun des signaux pendant lesquelles chacun des oscillateurs verrouillés par injection (110.1-110.m) est verrouillé sur une partie de la bande effective B.

**8.** Dispositif de mesure radar (100) selon l'une des revendications 6 ou 7, dans lequel chacun des oscillateurs verrouillés par injection (110.1-110.m) est configuré tel que sa bande de fréquences de verrouillage soit différente de celles des autres oscillateurs verrouillés par injection (110.1-110.m) et que les bandes de fréquences de verrouillage des oscillateurs verrouillés par injection (110.1-110.m) couvrent, ensemble, la bande effective B.

**9.** Dispositif de mesure radar (100) selon l'une des revendications 6 ou 7, comportant en outre un circuit de commande (128) de chacun des oscillateurs verrouillés par injection (110.1-110.m) configuré pour modifier, à chaque période du signal radar $RF_{IN}(t)$, la bande de fréquences de verrouillage de chacun des oscillateurs verrouillés par injection (110.1-110.m) tel que, sur plusieurs périodes du signal radar $RF_{IN}(t)$, les bandes de fréquences de verrouillage des oscillateurs verrouillés par injection (110.1-110.m) incluent, ensemble, la bande effective B.

**10.** Dispositif de mesure radar (100) selon la revendication 9, dans lequel les oscillateurs verrouillés par injection (110.1-110.m) sont configurés pour se verrouiller successivement ou simultanément sur différentes parties de la bande effective B.

**11.** Dispositif de mesure radar (100) selon l'une des revendications 4, 9 ou 10, dans lequel :

- le circuit de commande (128) est configuré pour appliquer, en entrée de l'oscillateur verrouillé par injection (110) ou de chacun des oscillateurs verrouillés par injection (110.1-110.m), une tension de contrôle dont la valeur détermine une fréquence centrale $f_c$ d'une bande de fréquences de verrouillage de l'oscillateur verrouillé par injection (110) ou de chacun des oscillateurs verrouillé par injection (110.1-110.m), et/ou
- le circuit de commande (128) est configuré pour modifier les valeurs de capacités commutées d'au moins un résonateur dans l'oscillateur verrouillé par injection (110) ou dans chacun des oscillateurs verrouillés par injection (110.1-110.m).

**12.** Dispositif de mesure radar (100) selon l'une des revendications précédentes, comportant en outre au moins un amplificateur de puissance (106) disposé entre l'antenne d'émission (108) et le ou les premiers diviseurs de puissance (104, 104.1-104.m).

**13.** Dispositif de mesure radar (100) selon l'une des revendications précédentes, comportant en outre au moins un amplificateur faible bruit (116) interposé entre l'antenne de réception (112) et le mélangeur (118) ou, lorsque le dispositif de mesure radar (100) comporte plusieurs deuxièmes diviseurs de puissance (130.1), entre l'antenne de réception (112) et les deuxièmes diviseurs de puissance (130.1).

**14.** Dispositif de mesure radar (100) selon l'une des revendications précédentes, dans lequel le circuit de traitement de signal (120) est configuré pour réaliser une compensation d'un déphasage entre le signal radar $RF_{IN}(t)$ et le ou les signaux délivrés en sortie du ou des oscillateurs verrouillés par injection (110, 110.1-110.m).

**15.** Dispositif de mesure radar (100) selon la revendication 14, comportant en outre un circuit de rebouclage commandable configuré pour, dans une configuration de mesure du déphasage entre le signal radar $RF_{IN}(t)$ et le ou les signaux délivrés en sortie du ou des oscillateurs verrouillés par injection (110, 110.1-110.m), connecter directement la première sortie du premier diviseur de puissance (104) ou de l'un des premiers diviseurs de puissance (104.1-104.m) à la première entrée du mélangeur (118) ou de chacun des mélangeurs (118.1-118.m), et dans lequel le circuit de traitement de signal (120) est configuré pour réaliser une mesure du déphasage entre le signal radar $RF_{IN}(t)$ et le ou chacun des signaux délivrés en sortie du ou des oscillateurs verrouillés par injection (110, 110.1-110.m), puis la compensation de déphasage en utilisant la ou les mesures de déphasage réalisées.

FIG.1

FIG.2

FIG.3

FIG.4

FIG.5

FIG.6

FIG.7

FIG.8

FIG.9

FIG.10

FIG.11

108  106  104.1

$\tau_2 = \dfrac{2R_2}{C}$

114.1

114.2  $\tau_1 = \dfrac{2R_1}{C}$

112

116  130.1  118.1

118.m

104.m  100  102

110.1

Vctrl

C variable  $ILO_1$  110.m

C variable  Vctrl  $ILO_m$

122  124  120

A/D
CH₁

A/D
CH.m

122  124  126

**FIG.12**

208.3  206
208.2

204

208.1

$T_{ramp}$  210.1

210.2

210.3

212

**FIG.13**

FIG.14

FIG.15

Europäisches
Patentamt

European
Patent Office

Office européen
des brevets

# RAPPORT DE RECHERCHE EUROPEENNE

**Numéro de la demande**

**EP 21 21 0043**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LAI YI-CHEN ET AL: "Finger Gesture Sensing and Recognition Using a Wi-Fi-based Passive Radar", 2019 IEEE MTT-S INTERNATIONAL MICROWAVE SYMPOSIUM (IMS), IEEE, 2 juin 2019 (2019-06-02), pages 293-296, XP033579394, * figure 1 * * abrégé * * alinéa [II.A] *  ----- | 1 | INV. G01S7/03 G01S7/285 G01S7/35 G01S13/26 G01S13/34 |
| | | | **DOMAINES TECHNIQUES RECHERCHES (IPC)** |
| | | | G01S |

Le présent rapport a été établi pour toutes les revendications

| Lieu de la recherche | Date d'achèvement de la recherche | Examinateur |
|---|---|---|
| Munich | 12 avril 2022 | Alberga, Vito |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- IEEE Standard for Radar Definitions. *IEEE Std 686-2017,* vol. 2017, 1-54

- **DE A. SILIGARIS et al.** A 60 GHz UWB impulse radio transmitter with integrated antenna in CMOS65nm SOI technology. *Silicon Monolithic Integrated Circuits in RF Systems (SiRF),* 2011, 153-156